Europäisches Patentamt

European Patent Office

Office européen des brevets

(11) Veröffentlichungsnummer : **0 115 247**
B1

(12)

# EUROPÄISCHE PATENTSCHRIFT

(45) Veröffentlichungstag der Patentschrift :
04.03.87

(51) Int. Cl.⁴ : **C 03 B** 5/235, F 23 D 1/00

(21) Anmeldenummer : 83730118.3

(22) Anmeldetag : 06.12.83

(54) Brennereinrichtung für Glasschmelzöfen.

(30) Priorität : 06.12.82 DE 3245488
06.07.83 DD 252811

(43) Veröffentlichungstag der Anmeldung :
08.08.84 Patentblatt 84/32

(45) Bekanntmachung des Hinweises auf die Patenterteilung : 04.03.87 Patentblatt 87/10

(84) Benannte Vertragsstaaten :
DE FR GB IT

(56) Entgegenhaltungen :
DE-A- 3 218 392
FR-A- 1 582 409
FR-A- 2 329 601
GB-A- 624 890
GB-A- 2 094 969
US-A- 2 020 760
US-A- 2 300 426
US-A- 3 969 068
GLASS AND CERAMICS, Band 37, Nr. 11-12, Novem-
ber-Dezember 1980, New York, A.S. KOZLOV et al.
"Optimum construction of burner ports in the glass
furnaces", Seiten 536-538

(73) Patentinhaber : KÖRTING HANNOVER AG
Badenstedter Strasse 56
D-3000 Hannover 91 (DE)

(72) Erfinder : Hupe, Adolf, Dr.-Ing.
Lauenburger Hof 3
D-3000 Hannover 1 (DE)
Erfinder : Wiedmann, Uwe, Dr.-Ing.
Salzweg 53
D-3003 Ronnenberg 1 (DE)
Erfinder : Sieger, Werner
Geveker Kamp 45
D-3000 Hannover 91 (DE)

(74) Vertreter : Eikenberg & Brümmerstedt Patentanwälte
Schackstrasse 1
D-3000 Hannover 1 (DE)

## Beschreibung

Der Einsatz von Kohlenstaub oder anderen staubförmigen Brennstoffen beschränkte sich bislang im wesentlichen auf Großfeuerungen, wie Kraftwerke, und im Bereich der industriellen Prozeßwärme auf die Drehöfen der Zementindustrie. Der Preisanstieg für flüssige und gasförmige Brennstoffe hat jedoch zu einem zunehmenden Bedarf an Staubfeuerungen für Anwendungsbereiche der industriellen Prozesswärme mit kleinerer Feuerungsleistung geführt, so auch für Glasschmelzöfen in der Hohl- und Flachglas-Industrie. Die Erfindung betrifft eine mit staubförmigen Brennstoffen betriebene Brennereinrichtung für Glasschmelzöfen, bei denen die Ofenwandung oberhalb des Glasspiegels mindestens einen Einlaßkanal zur Zufuhr von vorgewärmter Verbrennungsluft in den Ofenraum enthält und jedem Einlaßkanal wenigstens eine Brennerlanze zugeordnet ist.

Staubflammen unterscheiden sich im Zünd- und Ausbrennverhalten erheblich von Flammen aus flüssigen und gasförmigen Brennstoffen. Flüssige und gasförmige Brennstoffe zünden problemlos und verbrennen dann praktisch rückstandsfrei. Bei einem Brennstaub müssen jedoch die festen Brennstoffteilchen zunächst soweit aufgeheizt werden, daß die darin enthaltenen flüchtigen Bestandteile ausgasen und zünden können. Erst danach erfolgt der Ausbrand der nicht-flüchtigen Bestandteile der Teilchen. Da feste Brennstoffe generell einen verhältnismäßig hohen Gehalt an anorganischen, also unbrennbaren Bestandteilen besitzen (der bei Steinkohle meistens zwischen 5 und 20 % liegt und bei anderen Materialien wie Braunkohle noch höher sein kann), führen Staubflammen auch zu einem entsprechend hohen Asche-Rückstand. Außerdem kann sich auch ein Rückstand an nicht vollständig ausgebrannten Brennstoffteilchen ergeben, weil diejenigen brennenden Teilchen, die den Zusammenhang der Flamme verlassen und einzeln in den Ofenraum gelangen, zum vorzeitigen Erlöschen neigen.

Voraussetzung für ein Einsetzen der Zündung und für einen stetigen Ausbrand ist es bei Staubflammen, daß allen Brennstoffteilchen möglichst rasch nach dem Eintritt in den Ofenraum ein ausreichendes Sauerstoffangebot zur Verfügung steht. Aus diesem Grunde ist es üblich, Staubbrenner so auszubilden, daß der Brennstaubstrahl in kegelförmig aufgespreizter Form in den Ofen einströmt. Dies läßt sich beispielsweise erreichen durch Einblasen von Luft in den Brennstaubstrahl, durch Verdrallung des Brennstaubstrahles, durch eine teilweise Versperrung der Brennerlanzenmündung oder durch eine konisch erweiterte Brennerlanzenmündung. Eine solche Aufspreizung begünstigt das Eindringen der im Ofenraum vorhandenen heißen Gase in den Brennstaubstrahl und damit die Bildung eines zündfähigen Gemisches, ergibt aber gleichzeitig auch eine dicke bauchige Flammenform.

Ein großes Problem beim Einsatz von Brennstauben bei Glasschmelzöfen ist die nicht rückstandsfreie Verbrennung, weil die Flamme sich unmittelbar oberhalb der in der Schmelzwanne befindlichen Glasschmelze befindet und die Verbrennungsrückstände sehr leicht die Glasschmelze verunreinigen können. Zwar ist ein Teil der Aschebestandteile (insbesondere die Oxide des Siliziums sowie der Alkali-, Erdalkali- und Erdmetalle) mit der Glasschmelze einigermaßen verträglich, aber die in der Asche stets auch enthaltenen Schwermetalloxide (insbesondere Eisenoxide) und etwaige unverbrannte Kohlenstoffreste können Farbe und Qualität der Glasschmelze sehr nachteilig beeinträchtigen. Somit muß gewährleistet sein, daß alle Verbrennungsrückstände aus dem Ofenraum abgeführt werden und nicht die Glasschmelze verunreinigen können. Gerade das ist aber bei den bisher üblichen Brennerausbildungen mit aufgespreiztem Brennstaubstrahl nicht zu erwarten.

Tatsächlich hat auch der einzige bisher bekannt gewordene Versuch, solche Kohlenstaubbrenner mit aufgespreiztem Brennstaubstrahl zur Beheizung von Glasschmelzöfen einzusetzen, nicht zum Erfolg geführt, sondern mußte nach etwa einer Woche aufgegeben werden, weil die Glasschmelze durch zunehmende Verunreinigungen schließlich unbrauchbar wurde. Bei diesem Versuch war die Brennerlanze oberhalb der auch als « Brennerport » bezeichneten ofenraumseitigen Öffnung des Einlaßkanals für die vorerhitzte Verbrennungsluft (also in sogenannter « Overport-Anordnung ») in der Ofenwand angeordnet und schräg nach unten auf den Glasspiegel gerichtet, so daß der Brennstaubstrahl von oben auf die Verbrennungsluft strömte. Dadurch sollte erreicht werden, daß der Verbrennungsluftstrom als Träger für den Brennstaub dient und zugleich eine über die Glasschmelze strömende Isolierschicht bildet, welche eine Berührung der Asche mit der Glasschmelze verhindert. Die Praxis hat jedoch gezeigt, daß dieses Ziel nicht erreicht wurde.

Außerdem hat sich auch die Tatsache, daß ein aufgespreizter Brennstaubstrahl zu einer bauschigen und damit verhältnismäßig kurzen Flamme führt, nachteilig bemerkbar gemacht. Für den Schmelzprozeß des Glasgemenges ist es sowohl bei Querbefeuerung als auch bei Längsbefeuerung des Glasschmelzofens erforderlich, daß die Flamme auf etwa 2/3 der Ofenraumbreite bzw. -länge ausbrennt und sich eine gleichmäßige Schmelze ausbildet. Wegen der bauschigen Flamme konnte auch diese Forderung nicht ausreichend erfüllt werden.

Eine lange schlanke Flammenform, wie sie für Glasschmelzöfen benötigt wird, könnte im Prinzip dadurch erzeugt werden, daß ein kompakter, nicht aufgefächerter Brennstaubstrahl in den Ofenraum eingeleitet wird. In der Praxis verbietet sich jedoch auch diese Möglichkeit, weil es bei einem kompakten Brennstaubstrahl viel zu lange dauert, bis sich durch Vermischung mit den heißen Gasen im Ofenraum ein zünd- und brennfähiges Staub/Luft-Gemisch gebildet hat. Somit setzt die Zündung erst in einem größeren Abstand von der Lanzenmündung ein, mit der Folge, daß die brennerseitige Randzone der Glasschmelze nicht mehr ausreichend beheizt wird und daß sich das Flammenende bis hinter das Wannenende erstreckt. Hinzu kommt, daß ein kompakter Brennstaubstrahl zu instabilen Zündverhältnissen neigt und daß in jedem Fall die Lage der Zündstelle lastabhängig ist, d. h. sich bei Änderung der Axialgeschwindigkeit des Brennstaubstrahles verschiebt.

Es besteht also nach wie vor ein erheblicher Bedarf an einer mit Brennstaub betriebenen Brennereinrichtung für Glasschmelzöfen, welche eine lange schlanke Flammenform mit stabiler Zündung unmittelbar hinter der Lanzenmündung liefert und zugleich gewährleistet, daß die Glasschmelze nicht mit Verbrennungsrückständen verunreinigt ist. Mit der Erfindung soll eine solche Brennereinrichtung geschaffen werden.

Erfindungsgemäß wird dieses Ziel erreicht, daß die Brennerlanze unterhalb der ofenraumseitigen Öffnung des Einlaßkanals angeordnet ist, wobei die Lanzenachse und die Längsmittelebene des Einlaßkanals einander in einem Punkt im Ofenraum oberhalb des Glasspiegels in einem Winkel zwischen 15° und 50° schneiden, und daß die Brennerlanze ein Zentralrohr zur Zufuhr eines Brennstaubstrahls mit hoher Brennstaub-Konzentration und hoher Axialgeschwindigkeit enthält, das von einem Rohr zur Zufuhr eines zusätzlichen Gasstromes in einen die Mündung des Zentralrohres umgebenden Ringspalt umgeben ist.

Ein erstes und wichtiges Merkmal der Erfindung ist eine sogenannte « Underport-Anordnung » der Brennerlanze, wie sie für flüssige und gasförmige Brennstoffe durchaus bekannt und bewährt ist. Bei Brennstauben wurde eine solche Underport-Anordnung bislang nicht für möglich gehalten, weil der Brennstoff von unten in die Verbrennungsluft eingeführt wird, wo die abschirmende Wirkung des Verbrennungsluftstromes verloren geht. Überraschend wurde jedoch gefunden, daß es auf eine solche abschirmende Wirkung des Verbrennungsluftstromes überhaupt nicht ankommt und daß sich im Gegenteil bei Underport-Anordnung der Brennerlanze jegliche Verunreinigung der Glasschmelze vermeiden läßt, wenn von solcher Ausgestaltung der Underport-Anordnung ausgegangen wird, daß die Lanzenachse und die Längsmittelebene des Lufteinlaßkanals einander in einem Winkel zwischen 15° und 50° schneiden. Das entspricht einer Lage des Schnittpunktes im ersten Drittel des Ofenraumes oberhalb der Glasschmelze.

Auch das weitere Merkmal, den Brennstaub mit hoher Konzentration und hoher Axialgeschwindigkeit, also in Form eines kompakten und nicht aufgefächerten Strahls zuzuführen, trägt wesentlich zur Verhinderung einer Verschmutzung der Glasschmelze bei, denn bei einem kompakten Strahl ist die Wahrscheinlichkeit, daß sich Brennstaubteilchen und Verbrennungsrückstände in radialer Richtung aus dem Zusammenhang der Flamme lösen und in die Schmelze gelangen, verringert. Zugleich sorgt ein solcher Strahl für die erwünschte Ausbildung einer langen schlanken Flamme.

Das dritte Merkmal der Zufuhr eines zusätzlichen Gasstromes in einen die Mündung des Brennstaub-Zentralrohres umgebenden Ringspalt ist für die Zündstabilisierung des Brennstaubstrahles entscheidend. Dieses Merkmal beruht auf der konsequenten Ausnutzung der Erkenntnis, daß auch bei einem kompakten, nicht aufgefächerten Brennstaubstrahl sehr wohl eine stabile Zündung unmittelbar hinter der Lanzenmündung erreicht und unter unterschiedlichen Last-Bedingungen aufrechterhalten werden kann, wenn in den Ofenraum um den kompakten Strahl herum ein für sich auf optimale Zündbedingungen eingestelltes Zündgemisch eingeleitet wird. Dies wird mit dem in den Ringspalt eingeleiteten Gasstrom erreicht, indem dieser so auf den Brennstaubstrahl einwirkt, daß dessen äußere Randzone abgelöst und zu einem zündfähigen Gemisch aufbereitet wird, während der Hauptanteil des Brennstaubes in einem in der Axialgeschwindigkeit und in der Brennstaub-Konzentration praktisch unveränderten Kernstrahl verbleibt. Das zündfähige Gemisch bildet dabei eine den Kernstrahl umgebende Ringströmung mit gegenüber dem Kernstrahl verringerter Axialgeschwindigkeit und Brennstaubkonzentration. Diese Ringströmung läßt sich hinsichtlich der für die Zündung maßgebenden Faktoren (Brennstaub-Konzentration und Axialgeschwindigkeit) durch entsprechende Einstellung der Einwirkung des Gasstromes auf den Brennstaubstrahl innerhalb sehr weiter Grenzen unabhängig vom Kernstrahl verändern und überdies auch so gestalten, daß die darin enthaltenen Brennstaubteilchen ebenso wie im Kernstrahl keine nennenswerte Geschwindigkeitskomponente in radialer Richtung besitzen.

Insgesamt ergibt sich durch ein wechselseitiges Zusammenwirken der drei vorgenannten Merkmale der Erfindung eine neuartige und ausgezeichnet für Glasschmelzöfen geeignete Brennereinrichtung, bei der der aus der Brennerlanze austretende Brennstaubstrahl eine lange schlanke Flammenform liefert, die bereits unmittelbar hinter der Lanzenmündung stabil zündet, die erst auf etwa 2/3 der Ofenraumbreite bzw. -länge vollständig ausgebrannt ist und die auch die Glasschmelze nicht verschmutzt. Dadurch ist die erforderliche Wärmeübertragung auf die Glasschmelze gewährleistet, ohne daß deren Qualität beeinträchtigt wird.

Bei Brennstauben, die einen ausreichend hohen Gehalt an flüchtigen, also im Ofenraum ausgasenden und zündenden Bestandteilen haben, genügt es, einen Luftstrom als zusätzlichen Gasstrom in den das Zentralrohr umgebenden Ringspalt einzuführen. Es gibt aber auch Brennstaubtypen (z. B. Anthrazitstaub oder Koksstaube wie Petrolkoksstaub) mit einem so geringen Gehalt an flüchtigen Bestandteilen, daß im Ofenraum keine zur Zündung ausreichende Ausgasung stattfindet. Für diese Brennstaubtypen besteht der zusätzliche Gasstrom zweckmäßig aus einem brennfähigen Gas, das neben der Funktion der Aufbereitung der äußeren Randzone des Brennstaubstrahls auch noch die Funktion eines die Zündung und den Ausbrand des Brennstaubstrahls unterstützenden Stützbrennstoffes übernimmt. Dadurch wird auch der Einsatz von schwer zündbaren Brennstauben (die im allgemeinen besonders preisgünstig zur Verfügung stehen) in dem erfindungsgemäßen Brenner möglich. Außerdem ergibt sich dadurch aber auch eine vorteilhafte Verbesserung der Wärmebilanz des Glasschmelzofens, denn ein in den das Zentralrohr umgebenden Ringspalt eingeführter Luftstrom, der notwendigerweise kalt ist, muß auf die vorerhitzte Verbrennungsluft angerechnet werden, ein Brenngasstrom dagegen nicht.

In zweckmäßiger Weiterbildung der Erfindung ist an den die Mündung des Zentralrohres umgebenden Ringspalt eine Kammer mit einem gegenüber dem Zentralrohr vergrößerten Durchmesser angeschlossen. Diese Kammer verbessert die Ausbildung einer definierten Ringströmung um den Brennstaubstrahl herum.

Eine bevorzugte Ausführungsform der Erfindung sieht vor, an diese erste Kammer eine zweite Kammer anzuschließen, welche einen gegenüber der ersten Kammer nochmals vergrößerten Durchmesser besitzt und an der Mündung der ersten Kammer einen zweiten Ringspalt zur Zufuhr eines weiteren entweder aus Luft oder aus Brenngas bestehenden Gasstromes bildet. Dadurch läßt sich die Ausbildung der Ringströmung noch mehr verbessern, indem der erste Gasstrom zur optimalen Überführung der Randzone des Brennstaubstrahles in ein zündfähiges Gemisch herangezogen wird, während der zweite Gasstrom primär auf den Abbau etwaiger radialer Geschwindigkeitskomponenten in der Ringströmung eingestellt wird.

Zahlreiche insbesondere die Einstellung der Brennstaub-Konzentration und der Axialgeschwindigkeit der Ringströmung betreffende Ausgestaltungen und Weiterbildungen der Erfindung sind in den Unteransprüchen definiert und in der nachfolgenden Beschreibung anhand der Zeichnungen näher erläutert. Dabei sind gleiche oder funktionsmäßig gleiche Teile mit den gleichen Bezugszeichen bezeichnet. Es stellen dar :

Figur 1 schematisch die erfindungsgemäße Brennereinrichtung,

Figur 2 die einfachste Ausführungsform der Brennerlanze im Längsschnitt,

Figur 3 die zweckmäßigere Ausführungsform der Brennerlanze im Längsschnitt,

Figur 4 eine erste Ausgestaltung der bevorzugten Ausführungsform der Brennerlanze im Längsschnitt,

Figur 5 eine zweite Ausgestaltung der bevorzugten Ausführungsform der Brennerlanze im Längsschnitt,

Figur 6 eine dritte Ausgestaltung der bevorzugten Ausführungsform der Brennerlanze im Längsschnitt,

Figur 7 einen Querschnitt in der Ebene VII-VII der Fig. 6,

Figur 8 eine vierte Ausgestaltung der bevorzugten Ausführungsform der Brennerlanze im Längsschnitt,

Figur 9 eine fünfte Ausgestaltung der bevorzugten Ausführungsform der Brennerlanze im Längsschnitt,

Figur 10 eine sechste Ausgestaltung der bevorzugten Ausführungsform der Brennerlanze im Längsschnitt,

Figur 11 eine abgewandelte Ausführungsform mit einer Einrichtung zur Zufuhr von flüssigen Brennstoffen als Stützbrennstoff, und

Figuren 12A und B zwei Diagramme zur Erläuterung des Strömungsbildes an der Brennerlanzenmündung.

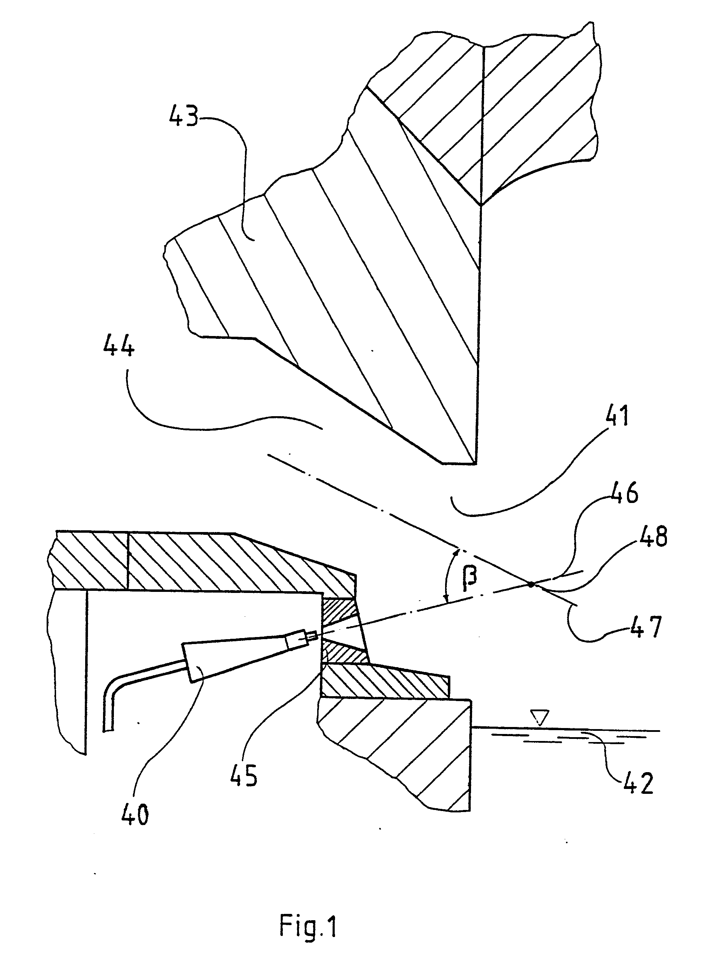

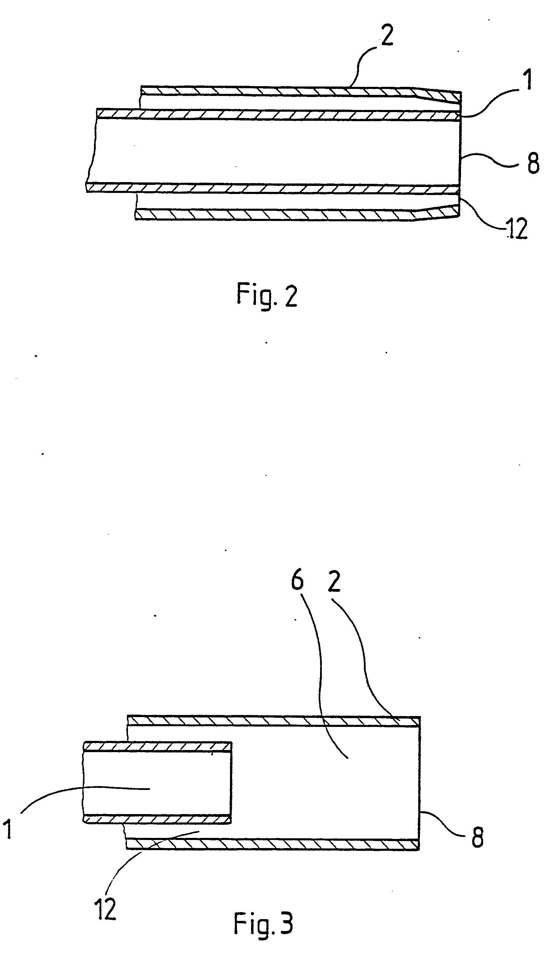

Fig. 1 zeigt schematisch einen die erfindungsgemäße Brennereinrichtung enthaltenden Glasschmelzofen. Die Ofenwandung 43 ist oberhalb des Glasspiegels 42 mit einem Brennerport versehen, nämlich einer Einlaßöffnung 41 für vorgeheizte Verbrennungsluft, an die sich nach außen hin ein Einlaßkanal 44 anschließt, der gegenüber der Horizontalen nach unten geneigt ist. Unterhalb der Einlaßöffnung 41 befindet sich ein Düsenstein 45, der gegenüber der ofenraumseitigen Oberfläche der Ofenwandung 43 zurückliegend in die Ofenwandung eingesetzt ist. Hinter diesem Düsenstein ist die (anhand der nachfolgenden Fig. 2-11 näher beschriebene) Lanze 40 eines Staubbrenners so angeordnet, daß die Lanzenmündung einen geringen Abstand von nur wenigen Zentimetern von dem Düsenstein besitzt und daß die Lanzenachse 46 schräg nach oben weist. Die Lanzenachse schneidet dabei in einem Punkt 48, der im ersten Drittel des Ofenraumes oberhalb des Glasspiegels 42 liegt, die Längswinkelebene 47 des Brennerports, wobei der Schnittpunktwinkel ß den Bereich von 15-50° und vorzugsweise den Bereich von 30-40° hat.

Eine derartige, auch als « Underport-Anordnung » bezeichnete Anordnung der Brennerlanze ist, wie eingangs dargelegt, ein den Erfolg der Erfindung wesentlich mitbestimmendes Merkmal. Außerdem werden durch die Underport-Anordnung auch noch weitere Vorteile nutzbar gemacht, insbesondere dahingehend, daß nebeneinander mehrere Brennerlanzen in einem Brennerport angeordnet werden können, um ein flaches und breites Flammenband über der Glasschmelze zu erreichen, und daß problemlos ein Lanzenwechsel vorgenommen werden kann, ohne den Glasschmelzofen außer Betrieb setzen zu müssen.

Im Betrieb der Brennereinrichtung gemäß Fig. 1 strömt durch den Brennerport die z. B. auf etwa 1 200 °C vorerhitzte Verbrennungsluft in den Ofenraum. Zugleich wird aus der Brennerlanze dem Ofenraum ein Brennstaubstrahl von hoher Brennstaub-Konzentration und hoher Axialgeschwindigkeit zugeführt, der sich mit der Verbrennungsluft vermischt und im Ofenraum in langer schlanker Flammenform oberhalb des Glasspiegels 42 ausbrennt. Der Brennstaubstrahl ist dabei von einer zündfähig aufbereiteten Ringströmung umgeben, so daß die Zündung des Brennstaubstrahls praktisch unmittelbar hinter dem Düsenstein 45 einsetzt, und zwar unabhängig von den Last-Bedingungen.

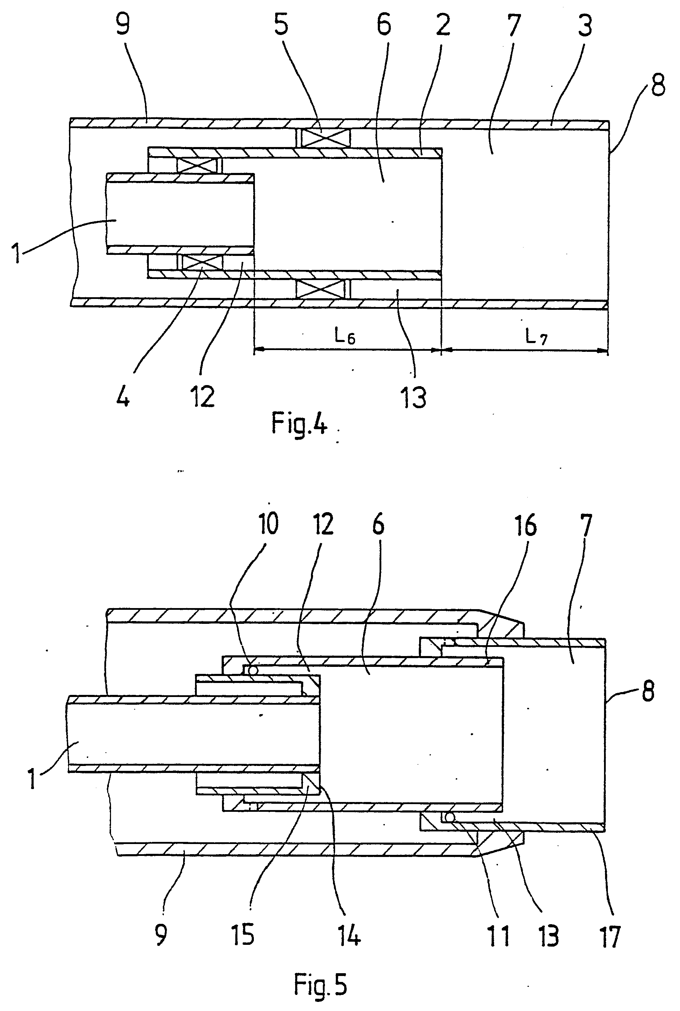

In Fig. 4 ist eine erste Ausgestaltung der bevorzugten Ausführungsform der Brennerlanze 40 dargestellt. In dieser bevorzugten Ausführungsform besitzt die Brennerlanze drei Haupt-Bestandteile, nämlich ein Zentralrohr 1 zur Brennstoff-Zufuhr und daran stromabwärts anschließend zwei Aufbereitungskammern 6 und 7. Die erste Aufbereitungskammer 6 ist durch eine Rohrwand 2 gebildet, welche den Mündungsbereich des Zentralrohres 1 mit Abstand so umgibt, daß zwischen dem Zentralrohr 1 und der Rohrwand 2 ein erster Ringspalt 12 verbleibt. Entsprechend ist die zweite Aufbereitungskammer 7 durch eine Rohrwand 3 begrenzt, welche den Mündungsbereich der Rohrwand 2 mit Abstand so umgibt, daß sich zwischen den Rohrwänden 2 und 3 ein zweiter Ringspalt 13 ausbildet. Die Rohrwände 2 und 3 sind jeweils konzentrisch zum Zentralrohr 1 angeordnet.

Die Rohrwand 3 stellt im Prinzip eine Verlängerung eines ebenfalls zum Zentralrohr 1 konzentrischen Rohres 9 dar, welches zur Zufuhr eines Aufbereitungs-Gasstromes dient. Die Rohrwand 2 mündet stromaufwärts des Mündungsbereiches des Zentralrohres innerhalb dieses Gasrohres 9 in solcher Anordnung, daß der zugeführte Aufbereitungs-Gasstrom zum einen Teil durch den Ringspalt 12 in die Kammer 6 und zum anderen Teil durch den Ringspalt 13 in die Kammer 7 einströmt. In den beiden Ringspalten 12 und 13 befinden sich dabei zwei entgegengesetzt wirkende Drallerzeuger 4 bzw. 5, die den durch die Ringspalte hindurch in die beiden Kammern 6 und 7 einströmenden Teilgasströmen einen entgegengesetzt gerichteten Drall erteilen. In der dargestellten Ausführungsform sind die beiden Drallerzeuger als Leitschaufelgitter angenommen, von denen das Gitter 4 einen Rechtsdrall und das Gitter 5 einen Linksdrall erzeugt. Die Reihenfolge von Rechtsdrall und Linksdrall kann ebenso aber auch umgekehrt sein.

Im Betrieb der Brennerlanze gemäß Fig. 4 wird der Brennstoff als Brennstaub-Förderluft-Gemisch durch das Zentralrohr 1 zugeführt und durchströmt in Form eines Strahles mit hoher Geschwindigkeit und hoher Brennstaub-Konzentration aufeinanderfolgend die beiden Aufbereitungskammern 6 und 7. Gleichzeitig damit werden auch über das Gasrohr 9 die beiden Teilgasströme in die Kammern 6 und 7 eingeleitet, und zwar infolge der Anordnung der Ringspalte 12 bzw. 13 jeweils ringförmig um den Brennstaubstrahl herum.

Der über den Ringspalt 12 mit Drall in die Kammer 6 eingetretene Teilgasstrom, der eine gegenüber dem Brennstaubstrahl geringere Axialgeschwindigkeit besitzt, überträgt Drallenergie auf die äußere Randzone des Brennstaubstrahles, mit der Folge, daß die Brennstaubteilchen in dieser äußeren Randzone abgetrennt und durch Zentrifugalkraft nach außen transportiert werden. Dabei verringert sich ihre axiale Geschwindigkeitskomponente, und zugleich ergibt sich eine Vermischung dieser Brennstaubteilchen mit dem in der Kammer 6 befindlichen Teilgasstrom. Im Ergebnis setzt sich somit die aus der Kammer 6 in die folgende Kammer 7 übertretende Strömung zusammen aus einem in seinem Durchmesser etwas verringerten, ansonsten aber praktisch unverändert gebliebenen Brennstaub-Kernstrahl und einer darum herum verlaufenden Drallströmung, in der sowohl die Geschwindigkeit als auch die Brennstaub-Konzentration geringer ist als im Kernstrahl.

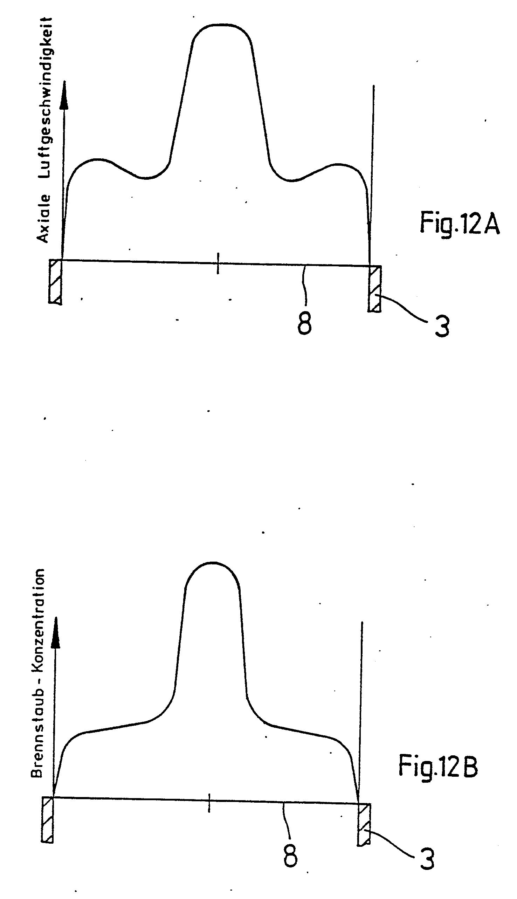

Der mit Gegendrall in die Kammer 7 eingetretene zweite Teilgasstrom trifft im wesentlichen zunächst auf die aus der Kammer 6 stammende Drallströmung und baut deren Drall weitgehend bis vollständig ab. Dabei werden — teils durch den Drall des zweiten Teilgasstromes und teils durch die beim Drallabbau entstehenden Verwirbelungen — auch noch weitere Brennstaubteilchen aus der äußeren Randzone des Brennstaub-Kernstrahles herausgelöst und in die den Kernstrahl umgebende, in Strahlrichtung zunehmend drallfreier und beruhigter werdende Ringströmung überführt. Auf diese Weise ergibt sich schließlich an der Mündung 8 der zweiten Kammer 7, die zugleich die Mündung der Brennerlanze darstellt, das in den Diagrammen gemäß Fig. 12A und 12B dargestellte Strömungsprofil, d. h. es ist an der Mündung 8 nach wie vor ein starker Kernstrahl mit hoher Axialgeschwindigkeit und hoher Brennstaub-Konzentration vorhanden, der von einer sowohl hinsichtlich der Axialgeschwindigkeit als auch der Brennstaub-Konzentration deutlich verringerten Ringströmung umgeben ist.

Die aus der Mündung 8 der Brennerlanze austretende Strömung ist in den in Fig. 4 nicht mehr dargestellten Ofenraum gerichtet, dem zugleich über den Brennerport auch die Hauptverbrennungsluft zugeführt wird. Da der in der äußeren, den Kernstrahl umgebenden Ringströmung enthaltene, verhältnismäßig kleine Anteil des insgesamt über das Zentralrohr 1 zugeführten Brennstaubes infolge der Verringerung der Geschwindigkeit und Brennstaub-Konzentration bereits zündfähig aufbereitet ist, kann in dieser Ringströmung bereits in einem kurzen Abstand hinter der Mündung 8 unter den thermischen Bedingungen des Verbrennungsraumes eine stabile Zündung einsetzen. Der Kernstrahl, der den größeren Anteil des zugeführten Brennstaubes enthält, bleibt von dieser Zündung zunächst unberührt, wird jedoch im Verlaufe des weiteren Eindringens in den Ofenraum zunehmend mit heißem Rauchgas und aufgeheizter Verbrennungsluft vermischt, so daß er dann auch von seinem Rand aus zur Strahlmitte hin stetig ausbrennt. Somit stellt das in den Fig. 12A und 12B dargestellte Profil der von der Brennerlanze abgegebenen Strömung sowohl definierte Zündbedingungen als auch eine lange schlanke Flammenform sicher.

Das über das Gasrohr 9 zur Aufbereitung zugeführte Gas kann luft oder ein Brenngas, z. B. Erdgas sein, wobei, wie schon eingangs erläutert, im letzteren Falle das Brenngas neben der Aufbereitungs-Funktion zusätzlich noch die Funktion eines Stützbrennstoffes übernimmt.

Im Gegensatz zu der dem Verbrennungsraum vorerhitzt zugeführten Hauptverbrennungsluft sind alle über die Brennerlanze dem Verbrennungsraum zugeführten Gasströme, also die Förderluft im Zentralrohr 1 und die Aufbereitungsluft bzw. das Aufbereitungs-Brenngas im Gasrohr 9, praktisch nicht vorwärmbar. Alle über die Brennerlanze zugeführten Luftströme müssen dabei der Verbrennungsluft zugerechnet werden und sollten deshalb auf einem geringstmöglichen Wert gehalten werden, um die Wärmebilanz des Ofens nicht unnötig zu verschlechtern (wobei ein möglichst geringer Wert für den Anteil der Förderluft im Brennstaubstrahl zugleich der Forderung nach einer möglichst hohen Brennstaub-Konzentration entgegenkommt). Aus diesem Grunde ist es zweckmäßig, einen Aufbereitungs-Luftstrom mit einem hohen Vordruck in das Gasrohr 9 einzuführen, damit die erforderliche Drallenergie mit einem geringen Luftvolumenstrom in die Kammern 6 und 7 eingebracht wird. Ein Aufbereitungs-Brenngasstrom braucht der Verbrennungsluft nicht zugerechnet zu werden und hat deshalb keinen nachteiligen Einfluß auf die Wärmebilanz des Ofens. Gleichwohl sollte auch ein über das Rohr 9 zugeführtes Brenngas einen für die Drallerzeugung ausreichenden Vordruck besitzen.

Normalerweise ist bei allen Brennern der Brennstaubstrahl entsprechend den erforderlichen Lastbedingungen (Vollast/-Teillast) regelbar. Eine entsprechende Regelung ist für den Aufbereitungs-Gasstrom vorgesehen, um einen jeweils optimal an den Brennstaubstrahl angepaßten Gasvolumenstrom zu erreichen. Darüber hinaus können innerhalb der Brennerlanze aber auch noch die Bedingungen für die Einwirkung der beiden Teilgasströme aufeinander und auf den Brennstaubstrahl verändert werden, so daß sich für jeden vorgegebenen Brennstaubstrahl mit daran angepaßtem Aufbereitungs-Gasstrom das Strömungsbild an der Lanzenmündung 8 und damit das Zünd- und Ausbrennverhalten der Flamme individuell einstellen läßt.

Typische Parameter, die die Einwirkung der beiden Teilgasströme beeinflussen, sind der Volumenstrom der beiden Teilgasströme sowie deren Drallenergie und die wirksame Länge L6 bzw. L7 der Kammern 6 und 7. Somit ist es zweckmäßig, die Brennerlanze so auszubilden, daß neben dem Brennstaubstrahl und dem Aufbereitungs-Gasstrom auch die Verteilung des Aufbereitungsgases auf die beiden Ringspalte 12 und 13, der Drallwinkel der aus den Ringspalten 12 und 13 austretenden Teilgasströme sowie die wirksame Kammerlänge L6 und L7 unabhängig voneinander wählbar oder einstellbar sind. Die dafür erforderlichen konstruktiven Maßnahmen sind in der mehr schematischen Darstellung der Fig. 4 nicht gezeigt.

Durch entsprechende Justierung dieser Verstellgrößen ergibt sich eine Vielzahl von Einwirkungsmöglichkeiten. Beispielsweise kann mit dem Drallwinkel und/oder den relativen Volumenströmen der beiden Teilgasströme und/oder den relativen Kammerlängen der Anteil des aus dem Kernstrahl in die Ringströmung übergehenden Brennstaubes und damit das Zündverhalten des Brennstaubstrahles verändert werden, während durch den Gesamt-Volumenstrom der beiden Teilgasströme die Axialgeschwindigkeit der Ringströmung an der Lanzenmündung 8 festgelegt werden kann. Auf diese Weise läßt sich die Zündstelle der Flamme, die sich mit steigender Axialgeschwindigkeit und sinkender Zündfähigkeit von der Lanzenmündung 8 weg verschiebt, immer in dem gewünschten Bereich dicht hinter dem Düsenstein 45 (Fig. 1) halten. Eine weitere Beeinflussung des Zünd- und Ausbrennverhaltens ist beispielsweise dadurch gegeben, daß der Drall in einem der beiden Teilgasströme in den Kammern 6 oder 7 entfällt oder aber relativ zum Drall des anderen Teilgasstromes so vermindert wird, daß die Ringströmung an der Lanzenmündung 8 mit einem geringen Restdrall austritt. In jedem Fall ist es mit diesen Verstellgrößen in einfacher Weise möglich, einerseits jede Brennerlanze auf die jeweiligen ofenseitigen Erfordernisse einzustellen und andererseits im laufenden Betrieb das vorgeschriebene Zünd- und Ausbrennverhalten aufrechtzuerhalten, wenn sich die Lastbedingungen der Brennerlanze oder der Brennstaub hinsichtlich Zündfähigkeit und Heizwert ändern.

Die in Fig. 5 gezeigte zweite Ausgestaltung der bevorzugten Ausführungsform der Brennerlanze unterscheidet sich von der Ausgestaltung gemäß Fig. 4 in mehrfacher Hinsicht. Zum einen sind die in Fig. 4 als feststehend dargestellten Rohrwände 2 und 3 durch zwei z. B. mittels Gewinde axial verschiebbare Rohrstücke 16 und 17 ersetzt, um die wirksame Länge der Kammern 6 und 7 verändern zu können. Weiterhin erfolgt die Drallerzeugung in diesem Fall nicht durch Leitschaufelgitter, sondern durch tangentiale Bohrungen 10 und 11, die sich vom Innenraum des Gasrohres 9 aus durch die Rohrstücke 16 und 17 hindurch erstrecken und in den Ringspalten 12 bzw. 13 münden. Außerdem ist um die Mündung des Zentralrohres 1 noch ein ringförmiger Sperrblock 15 herumgelegt, der zwischen der Zentralrohr-Mündung und dem zugeordneten Ringspalt 12 eine Sperrfläche 14 (auch als « innere Sperrfläche » bezeichnet) bildet. Diese innere Sperrfläche erzeugt in der äußeren Randzone des Brennstaubstrahls eine Verwirbelung, welche die Überführung von Brennstaubteilchen aus der Strahl-Randzone in die umgebende Drallströmung begünstigt.

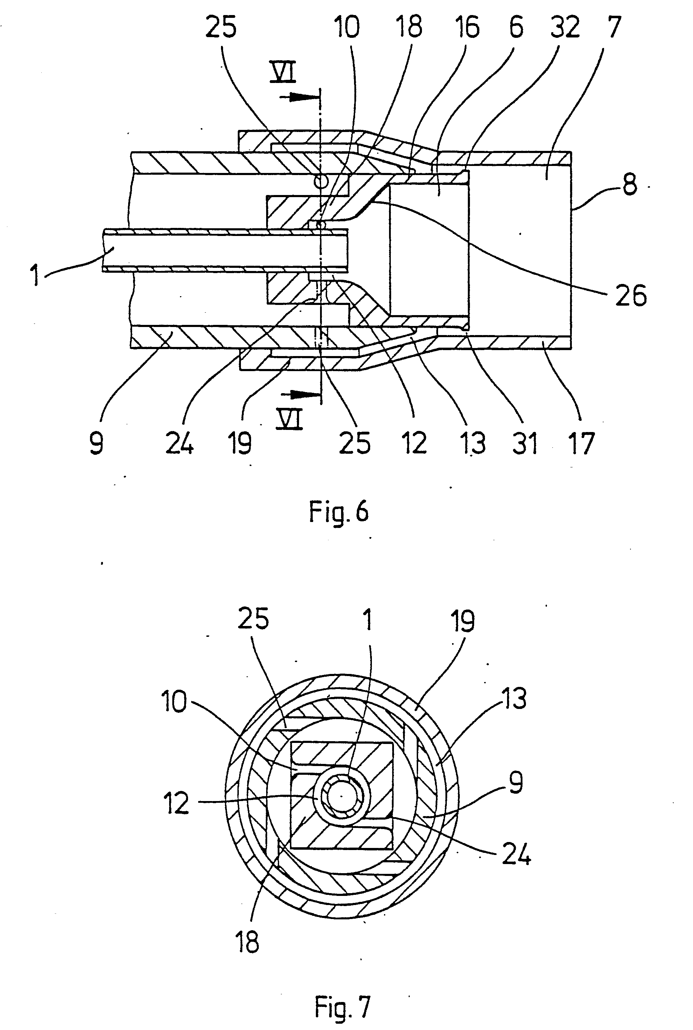

In der Ausgestaltung gemäß Fig. 6 und 7 der bevorzugten Ausführungsform der Brennerlanze sind die beiden verschieblichen, die Kammern 6 und 7 begrenzenden Rohrstücke 16 und 17 jeweils mit angeformten Ansatzstücken 18 bzw. 19 versehen und so ausgebildet, daß das Rohrstück 16 mit seinem Ansatzstück 18 das Zentralrohr 1 und das Rohrstück 17 mit seinem Ansatzstück 19 das Gasrohr 9 umgreift. Zur Drallerzeugung sind wiederum tangentiale Bohrungen 10 und 25 vorgesehen, von denen sich die Bohrungen 10 durch das Ansatzstück 18 in den Ringspalt 12 und die Bohrungen 25 durch das Gasrohr 9 in den Ringspalt 13 erstrecken. Die Bohrungen 10 besitzen dabei einen abgerundeten Einlauf 24, der in gleicher Weise natürlich auch bei den Bohrungen 25 bzw. 11 (Fig. 5) vorhanden sein kann. Außerdem ist auch wieder eine Sperrfläche 26 vorhanden, die jedoch bei dieser Ausführungsform in das Ansatzstück 16 des Rohrstückes 17 so eingeformt ist, daß sie zwischen den beiden Ringspalten 12 und 13 liegt, also eine « äußere Sperrfläche » in bezug auf den Ringspalt 12 ist. Die aus dem Ringspalt 12 austretende Drallströmung legt sich unter Wirbelbildung an diese äußere Sperrfläche 26 an, was im Ergebnis ebenso wie bei einer inneren Sperrfläche zu einer verstärkten Überführung von Brennstaubteilchen aus der Randzone des Brennstaubstrahles in die umgebende Drallströmung führt. Dabei ist es auch ohne weiteres möglich, in der Brennerlanze zusätzlich zur äußeren Sperrfläche 26 auch noch eine innere Sperrfläche 14 (gemäß Fig. 5) anzuordnen oder aber die Verwirbelung der Drallströmung durch nicht weiter dargestellte Pralleinrichtungen zu vergrößern.

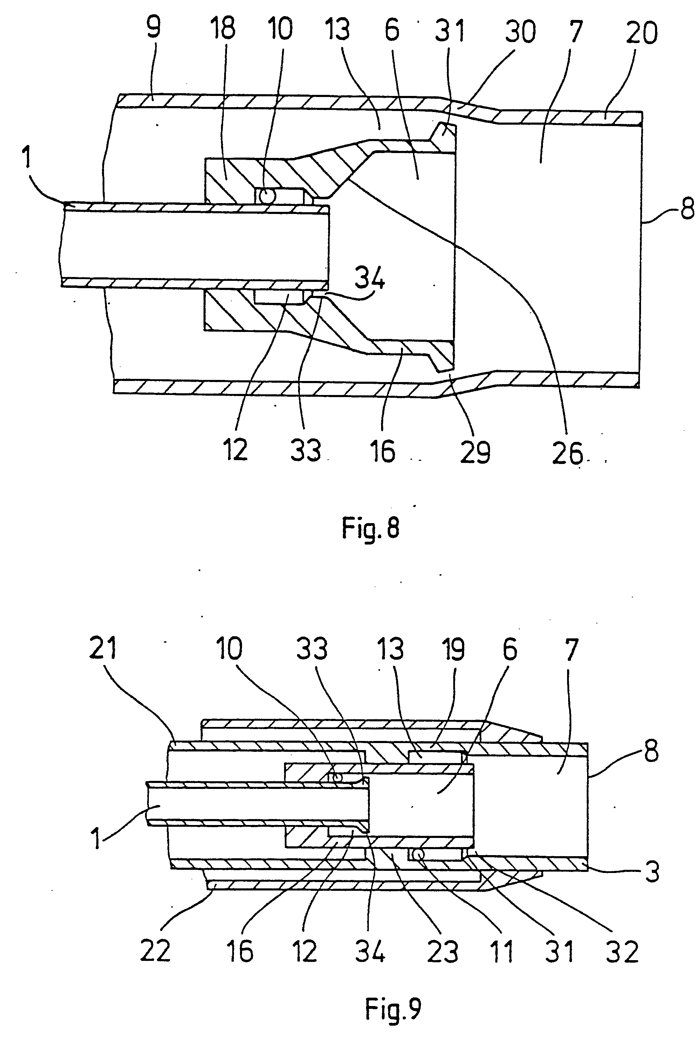

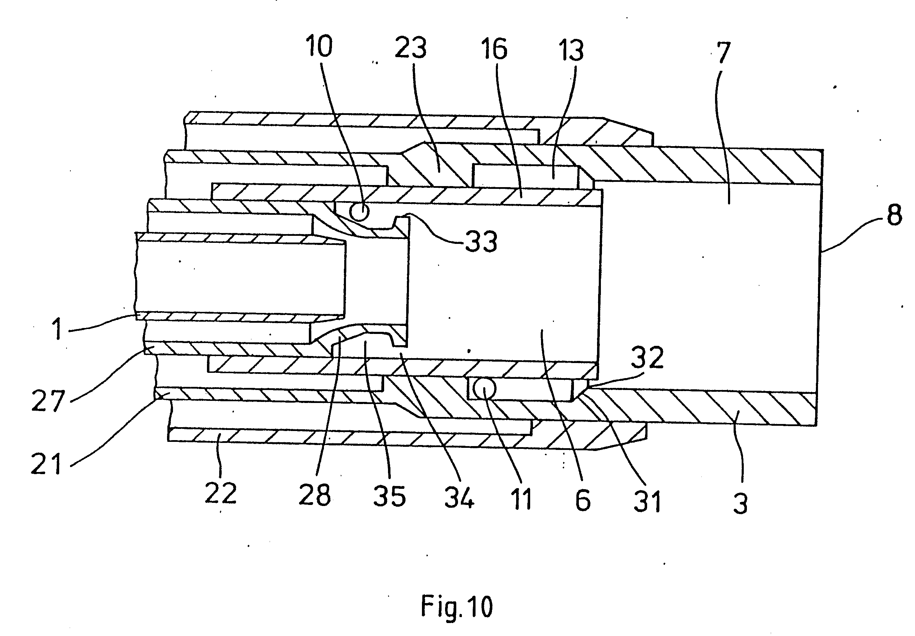

Ein weiteres in Fig. 6 gezeigtes Merkmal besteht darin, daß außen an der Mündung des Rohrstückes 16 eine ringförmige Schwelle 31 angeordnet ist, welche die Austrittsöffnung 32 des Ringspaltes 13 auf kurze axiale Länge verengt. Damit kann eine Rückströmung in den Ringspalt 13 und eine dadurch verursachte Verschmutzung verhindert werden. Diese Schwelle 31 kann alternativ auch an dem Rohrstück 17 angeordnet sein, wie die Fig. 9 und 10 erkennen lassen. Weiterhin läßt sich eine entsprechende Schwelle 33, wie aus Fig. 8 bis 10 hervorgeht, auch der Austrittsöffnung 34 des Ringspaltes 12 zuordnen. Je nach konstruktiver Ausbildung können die Schwellen zugleich auch als innere oder äußere Sperrfläche wirken.

Die Ausgestaltung der bevorzugten Ausführungsform der Brennerlanze gemäß Fig. 8 baut auf der Ausgestaltung gemäß Fig. 6 auf und zeigt die Möglichkeit einer Verstellung der Austrittsöffnung 29 des Ringspaltes 13 auf unterschiedliche Öffnungsquerschnitte. Dazu ist eine feststehende, die Kammer 7 begrenzende Rohrwand 20 über ein konisches Zwischenteil 30 mit dem Gasrohr 9 verbunden. Im Bereich dieses konischen Zwischenteils befindet sich die Mündung des die Kammer 6 begrenzenden Rohrstückes 16. Da das Rohrstück 16 ebenso wie in Fig. 6 über sein Ansatzstück 18 längsverschieblich auf dem Zentralrohr 1 gelagert ist, ändert sich bei Verschiebung des Rohrstückes 16 nicht nur die Kammerlänge, sondern zugleich auch der Öffnungsquerschnitt der Austrittsöffnung 29. Der über den Ringspalt 13 zugeführte Teilgasstrom ist in der Ausgestaltung der Fig. 8 unverdrallt, kann natürlich aber auch verdrallt sein.

Den in den Fig. 4 bis 8 dargestellten Ausgestaltungen der bevorzugten Ausführungsform der Brennerlanze ist gemeinsam, daß der Aufbereitungs-Gasstrom über ein einziges Rohr 9 zugeführt und dann auf die beiden Teilgasströme für die Kammern 6 und 7 aufgeteilt wird. In der Ausgestaltung gemäß Fig. 9 ist stattdessen eine separate Zufuhr der beiden Teilgasströme vorgesehen. Dies gestattet nicht nur in besonders einfacher Weise eine Verstellung der beiden Teilgasströme relativ zueinander, sondern ermöglicht es auch, den beiden Kammern 6 und 7 unterschiedliche Gase zuzuführen, beispielsweise der einen Kammer ein Aufbereitungs-Brenngas und der anderen Kammer Aufbereitungs-Luft.

In der Darstellung der Fig. 9 ist das Gasrohr 9 durch zwei zum Zentralrohr 1 konzentrische Rohre 21 und 22 ersetzt, von denen das innere Rohr 21 über die Bohrungen 10 und den Ringspalt 12 die erste Kammer 6 und das äußere Rohr 22 über die Bohrungen 11 und den Ringspalt 13 die zweite Kammer 7 mit je einem Teilgasstrom versorgt. Das innere Gasrohr 21 geht dabei feststehend in die die Kammer 7 begrenzende Rohrwand 3 über und ist im Bereich dieses Übergangs über eine Zwischenwand 23 gegen das die Kammer 6 begrenzende und analog Fig. 4 auf dem Zentralrohr 1 längsverschiebliche Rohrstück 16 abgedichtet. Das äußere Gasrohr 22 endet im Bereich der Rohrwand 3 und ist gegen diese abgedichtet.

Die in Fig. 10 dargestellte Ausgestaltung der bevorzugten Ausführungsform der Brennerlanze entspricht der Ausgestaltung gemäß Fig. 9 mit der Ausnahme, daß zwischen dem inneren Gasrohr 21 und dem Zentralrohr 1 noch ein weiteres Gasrohr 27 angeordnet ist, dessen Auslaß 28 die Mündung des Zentralrohes ringdüsenartig umgibt. Der der ersten Kammer 6 zugeordnete Ringspalt ist in diesem Fall zwischen dem Auslaß 28 und dem Rohrstück 16 gebildet und mit 35 bezeichnet. Außerdem schafft das Gasrohr 27 auch noch eine weitere Möglichkeit der Zufuhr von Brenngas/Luft-Gemischen zum Brennstaubstrahl, beispielsweise indem das Gasrohr 27 mit Luft und eines oder beide der Gasrohre 21 und 22 mit Brenngas versorgt werden, oder umgekehrt. Im übrigen kann das Gasrohr 27 mit dem ringdüsenartigen Auslaß 28 für Antriebsgas auch bei den anderen hier beschriebenen Ausführungsformen und Ausgestaltungen der Erfindung vorgesehen sein. Über das weitere Gasrohr 27 kann ein verstellbarer Antriebs-Gasstrahl (aus Luft oder Brenngas) zur zusätzlichen Beschleunigung des aus dem Zentralrohr 1 austretenden Brennstaubstrahls zugeführt werden. Dadurch ergibt sich eine zusätzliche Beeinflussung der Flammenform und weiterhin auch die Möglichkeit, die Geschwindigkeit des Brennstaubgemisches im Zentralrohr 1 herabzusetzten, was dessen Verschleiß vermindert.

Die anhand der Fig. 4 bis 10 dargestellten Ausgestaltungen der Brennerlanze betreffen sämtlich die bevorzugte Ausführungsform mit zwei aufeinander folgenden Aufbereitungskammern, in die zwei Aufbereitungs-Teilgasströme eingeleitet werden. In einer Reihe von Anwendungsfällen genügt es jedoch, die den Kernstrahl umgebende Ringströmung mit nur einem einzigen Teilgasstrom zu erzeugen, der bevorzugt unverdrallt ist, ggfs. aber auch leicht verdrallt sein kann. Das ist möglich mit der in Fig. 2 dargestellten einfachsten Ausführungsform der Brennerlanze, die lediglich den die Mündung des Zentralrohres 1 umgebenden Ringspalt 12 aufweist, und mit der in Fig. 3 dargestellten Weiterbildung, bei der sich an den Ringspalt 12 noch eine einzige Kammer 6 anschließt.

Vorangehend ist bei allen Ausführungsbeispielen unterstellt worden, daß der Brennstaub-Kernstrahl zur Erzeugung der langen schlanken Flammenform im wesentlichen unverdrallt ist. Bei Bedarf kann dem Kernstrahl aber auch ein gewisser Drall erteilt werden, beispielsweise durch entsprechende Verdrallung des Brennstaubgemisches im Zentralrohr 1 oder des Antriebs-Gasstrahls oder aber durch entsprechende Einstellung der Einwirkung der beiden Aufbereitungs-Gasströme auf den Brennstaubstrahl.

Im übrigen ist es für diejenigen Betriebsfälle, für die ein Stützbrennstoff erwünscht oder notwendig ist, nicht unbedingt erforderlich, diesen Stützbrennstoff (allein) durch den Einsatz von Aufbereitungs-Brenngas zur Verfügung zu stellen. Zwar ist ein gasförmiger Stützbrennstoff im allgemeinen bevorzugt, aber es sind auch Betriebsfälle möglich, in denen ein flüssiger Brennstoff (Brennöl) beispielsweise aus Preisgründen als alleiniger oder als zusätzlicher Stützbrennstoff günstiger ist. Ein flüssiger Stützbrennstoff wird dabei zweckmäßig über eine Zerstäubungsdüse zentral in den Brennstaubstrahl eingeführt.

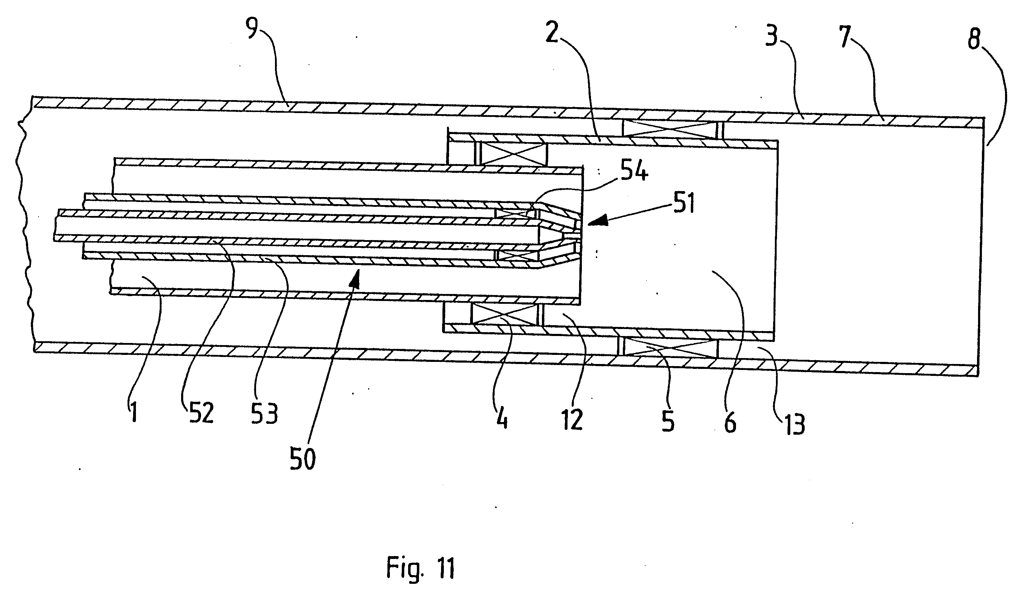

In Fig. 11 ist ein Ausführungsbeispiel für einen Brenner gezeigt, der in der vorangehend umrissenen Weise mit Brennöl als flüssigem Stützbrennstoff betrieben werden kann. Dieser Brenner unterscheidet sich von der Ausführungsform gemäß Fig. 4 lediglich darin, daß zentral im Zentralrohr 1 noch eine Öllanze 50 angeordnet ist, über die das Brennöl zugeführt wird. In dem dargestellten Beispiel enthält die Öllanze 50 ein Innenrohr 52 zur Ölzufuhr und koaxial dazu ein Außenrohr 53 zur Zufuhr eines Zerstäubungsgases (das wiederum, wie schon für das Aufbereitungsgas und das Antriebsgas beschrieben, wahlweise Luft oder ein Brenngas sein kann). Beide Rohre münden in einen Düsenkopf 51, der im Einlaßkanal des Zerstäubungsgases einen Drallerzeuger aufweist und eine Drallzerstäubung der flüssigen Stütz-brennstoffes in einem möglichst geringen Zerstäubungswinkel (von etwa 30°) bewirkt.

Zahlreiche Abwandlungen des in Fig. 11 gezeigten Ausführungsbeispiels sind möglich. So kann die Öllanze 50 auch bei allen anderen vorangehend erläuterten Ausführungsformen des Brenners angeordnet sein. Dabei kann das Ölrohr 52 im Falle der Verwendung von Schweröl oder anderen schwer fließbaren Ölen auch noch mit einem Heizmantel umgeben sein. Im übrigen kann der Düsenkopf 51 auch eine andere, in der Technik der Brennölzerstäubung übliche konstruktive Ausbildung besitzen.

**Patentansprüche**

1. Brennereinrichtung für Glasschmelzöfen, deren Wandung oberhalb des Glasspiegels (42) mindestens einen Einlaßkanal (44) zur Zufuhr von vorerhitzter Verbrennungsluft in den Ofenraum enthält, und jedem Einlaßkanal wenigstens eine Brennerlanze (40) zur Zufuhr eines staubförmigen Brennstoffstrahls zugeordnet ist, dadurch gekennzeichnet, daß die Brennerlanze (40) unterhalb der ofenraumseitigen Öffnung (41) des Einlaßkanals (44) angeordnet ist, wobei die Lanzenachse (46) und die Längsmittelebene (47) des Einlaßkanals einander in einem Punkt (48) im Ofenraum oberhalb des Glasspiegels (42) in einem Winkel ($\beta$) zwischen 15° und 50° schneiden, und daß die Brennerlanze (40) ein Zentralrohr (1) zur Zufuhr eines Brennstaubstrahls mit hoher Brennstaub-Konzentration und hoher Axialgeschwindigkeit enthält, das von einem Rohr (2) zur Zufuhr eines zusätzlichen Gasstromes in einen die Mündung des Zentralrohres umgebenden Ringspalt (12) umgeben ist.

2. Brennereinrichtung nach Anspruch 1, dadurch gekennzeichnet, daß an den die Mündung des Zentralrohres (1) umgebenden Ringspalt (12) eine Kammer (6) mit einem gegenüber dem Zentralrohr (1) vergrößerten Durchmesser angeschlossen ist.

3. Brennereinrichtung nach Anspruch 1 und 2, dadurch gekennzeichnet, daß an die Kammer (6) eine zweite Kammer (7) angeschlossen ist, welche einen gegenüber der ersten Kammer nochmals vergrößerten Durchmesser besitzt und an der Mündung der ersten Kammer einen zweiten Ringspalt (13) zur Zufuhr eines Teiles des zusätzlichen Gasstromes in die zweite Kammer (7) bildet.

4. Brennereinrichtung nach einem der Ansprüche 1 bis 3, dadurch gekennzeichnet, daß einem oder beiden Ringspalten (12) und (13) Drallerzeuger (4, 5 bzw. 10, 11 und 25) zugeordnet sind.

5. Brennereinrichtung nach Anspruch 4, dadurch gekennzeichnet, daß der Drallwinkel der Drallerzeuger (4, 5 bzw. 10, 11 und 25) von einem Maximalwert bis auf den Wert 0 veränderbar ist.

6. Brennereinrichtung nach einem der Ansprüche 3 bis 5, dadurch gekennzeichnet, daß die wirksame Länge (L6 und L7) der Kammern (6) und (7) einstellbar ist.

7. Brennereinrichtung nach Anspruch 6, dadurch gekennzeichnet, daß die erste Kammer (6) durch ein auf dem Zentralrohr (1) längs verschiebliches Rohrstück (16) und die zweite Kammer (7) entweder durch eine relativ zum Zentralrohr feststehende Rohrwand (3) oder ebenfalls durch ein längs verschiebliches Rohrstück (17) gebildet ist.

8. Brennereinrichtung nach einem der Ansprüche 1 bis 7, dadurch gekennzeichnet, daß einem oder beiden Ringspalten (12, 13) eine Einrichtung (14, 26) zur Erzeugung von Verwirbelungen zugeordnet ist.

9. Brennereinrichtung nach Anspruch 8, dadurch gekennzeichnet, daß die Einrichtung zur Erzeugung von Verwirbelungen als innere Sperrfläche (14) ausgebildet ist, die zwischen der Mündung des Zentralrohres (1) und der Austrittsöffnung des Ringspaltes (12) angeordnet ist.

10. Brennereinrichtung nach Anspruch 8, dadurch gekennzeichnet, daß die Einrichtung zur Erzeugung von Verwirbelungen als äußere Sperrfläche (26) ausgebildet ist, die zwischen der Austrittsöffnung des Ringspaltes (12) und der Wandung der Kammer (6) angeordnet ist.

11. Brennereinrichtung nach einem der Ansprüche 1 bis 10, dadurch gekennzeichnet, daß im Bereich der Austrittsöffnung (32, 34) mindestens eines Ringspaltes (12, 13) eine ringförmige Verengung (31 und 33) zur Verhinderung von Rückströmungen in den Ringspalt hinein vorgesehen ist.

12. Brennereinrichtung nach einem der Ansprüche 3 bis 11, dadurch gekennzeichnet, daß die beiden Ringspalte (12, 13) einlaßseitig mit einem gemeinsamen Gasrohr (9) verbunden sind.

13. Brennereinrichtung nach Anspruch 12, dadurch gekennzeichnet, daß der Öffnungsquerschnitt (29) eines der Ringspalte (12, 13) relativ zum anderen Ringspalt einstellbar ausgebildet ist.

14. Brennereinrichtung nach Anspruch 13, dadurch gekennzeichnet, daß die durch ein längs verschiebliches Rohrstück (16) gebildete erste Kammer (6) gegen ein konisches Wandungsteil (30) verschieblich ist.

15. Brennereinrichtung nach einem der Ansprüche 3 bis 11, dadurch gekennzeichnet, daß jeder der beiden Ringspalte (12, 13) einlaßseitig mit einem gesonderte Gasrohr (21, 22) verbunden ist.

16. Brennereinrichtung nach einem der vorhergehenden Ansprüche, dadurch gekennzeichnet, daß die Mündung des Zentralrohres (1) mit einem ringdüsenartigen Auslaß (28) umgeben ist, der mit einem weiteren Gasrohr (27) für Antriebsgas zur axialen Beschleunigung des Brennstaubstrahles verbunden ist.

17. Brennereinrichtung nach einem der vorhergehenden Ansprüche, dadurch gekennzeichnet, daß zentral in der Mündung der Zentralrohres (1) der Düsenkopf (51) einer Öllanze (50) zur Einführung eines flüssigen Brennstoffes in den Brennstaubstrahl angeordnet ist, wobei die Öllanze ein Rohr (53) zur Zufuhr eines Zerstäubungsgases und der Düsenkopf eine Einrichtung zur Druckgas-Zerstäubung des flüssigen Brennstoffes in einem geringen Zerstäubungswinkel enthält.

18. Brennereinrichtung nach einem der vorhergehenden Ansprüche, dadurch gekennzeichnet, daß die Gasrohre (2, 9, 21, 22) zur Zufuhr eines zusätzlichen Gasstromes in den Ringspalt (12) bzw. die Ringspalte (12, 13), das Gasrohr (27) zur Zufuhr eines Antriebsgases und das Rohr (53) zur Zufuhr eines Zerstäubungsgases wahlweise als Rohre zur Luftzufuhr oder als Rohre zur Zufuhr eines Brenngases eingerichtet sind.

## Claims

1. Burner arrangement for glass smelting furnaces, the walls of which comprise above the surface of the glass (42) at least one inlet port (44) for the feeding of pre-heated combustion air into the furnace chamber, at least one burner lance (40) for the feeding of a stream of pulverulent fuel being associated with each inlet port, characterised in that the burner lance (40) is disposed below the furnace-end aperture (41) of the inlet port (44), the lance axis (46) and the longitudinal central plane (47) through the inlet port intersecting each other at a point (48) in the furnace chamber above the surface of the glass (42) at an angle (β) of between 15 degrees and 50 degrees, and in that the burner lance (40) comprises a central tube (1) for feeding the jet of fuel dust of high fuel dust concentration and high axial velocity, the tube being enclosed by a tube (2) for feeding the additional stream of gas into an annular gap (12) surrounding the mouth to the central tube.

2. Burner arrangement according to Claim 1 characterised in that a chamber (6) of the diameter which is greater than that of the central tube (1) is connected to the annular gap (12) surrounding the mouth of the central tube (1).

3. Burner arrangement according to Claim 1 and 2, characterised in that connected to the chamber (6) is a second chamber (7) having a diameter which is once again larger than that of the first chamber and in that, at the mouth of the first chamber, a second annular gap (13) is formed for feeding a part of the additional gas stream into the second chamber (7).

4. Burner arrangement according to Claims 1 to 3 characterised in that swirl generators (4, 5 or 10, 11 and 25) are associated with one or both annular gaps (12) and (13).

5. Burner arrangement according to Claim 4, characterised in that the swirl angle of the swirl generators (4, 5 or 10, 11 and 25) is variable from a maximum value down to the value 0.

6. Burner arrangement according to one of Claims 3 to 5, characterised in that the effective length (L6 and L7) of the chambers (6) and (7) is adjustable.

7. Burner arrangement according to Claim 6, characterised in that the first chamber (6) is formed by a tube portion (16) which is longitudinally displaceable on the central tube (1) while the second chamber (7) is formed either by a tube wall (3) which is fixed in relation to the central tube or which is likewise formed by a longitudinally displaceable tube portion (17).

8. Burner arrangement according to one of Claims 1 to 7, characterised in that a device (14, 26) for generating turbulence is associated with one or both annular gaps (12, 13).

9. Burner arrangement according to Claim 8, characterised in that the device for generating turbulence is constructed as an inner barrier face (14) located between the mouth of the central tube (1) and the outlet orifice of the annular gap (12).

10. Burner arrangement according to Claim 8, characterised in that the device for generating turbulence is constructed as an outer barrier face (26) located between the outlet orifice of the annular gap (12) and the wall of the chamber (6).

11. Burner arrangement according to one of Claims 1 to 10, characterised in that in the region of the outlet orifice (32, 34) of at least one annular gap (12, 13) there is an annular narrowing (31 and 33) to prevent flowback into the annular gap.

12. Burner arrangement according to one of Claims 3 to 11, characterised in that the two annular gaps (12, 13) are on the inlet side connected to a common gas pipe (9).

13. Burner arrangement according to Claim 12, characterised in that the opening cross section (29) of one of the annular gaps (12, 13) is constructed to be adjustable in relation to the other annular gap.

14. Burner arrangement according to Claim 13, characterised in that the first chamber (6) formed by a longitudinally displaceable tube portion (16) is displaceable towards a conical wall part (30).

15. Burner arrangement according to one of Claims 3 to 11, characterised in that each of the two annular gaps (12, 13) is on the inlet side connected to a separate gas pipe (21, 22).

16. Burner arrangement according to one of the preceding claims, characterised in that the mouth of the central tube (1) is enclosed by an outlet (28) resembling an annular nozzle and is connected to a further gas pipe (27) for propellent gas for axial acceleration of the jet fuel dust.

17. Burner arrangement according to one of the preceding claims, characterised in that disposed centrally in the mouth of the central tube (1) there is the jet head (51) of an oil lance (50) for the introduction of a liquid fuel into the jet of fuel dust, the oil lance comprising a tube (53) for feeding an atomising gas while the jet head comprises a device for pressure gas atomising of the liquid fuel at a minimal angle of atomisation.

18. Burner arrangement according to one of the preceding claims, characterised in that the gas pipes (2, 9, 21, 22) for feeding the additional gas stream into the annular gap (12) or annular gaps (12, 13) the gas pipe (27) for feeding a propellent gas and the pipe (53) for feeding an atomising gas are optionally arranged as pipes for the feeding of air or as pipes for the feeding of a gaseous fuel.

**Revendications**

1. Installation de brûleur pour fours de fusion de verre dont une paroi présente au-dessus de la surface du verre un canal d'admission (44) pour l'alimentation de la chambre du four en air de combustion préchauffé, à chaque canal d'admission étant adjointe au moins une lance de brûleur (40) pour introduire un jet de combustible pulvérulent, caractérisé en ce que la lance de brûleur (40) est disposée sous l'ouverture latérale (41) du canal d'admission (44) dans la chambre du four, l'axe (46) de la lance et le plan moyen longitudinal (47) du canal d'admission se coupant dans la chambre du four en un point (48), situé au-dessus de la surface (42) du verre, suivant un angle (β) compris entre 15 et 50°, et en ce que la lance de brûleur (40) comprend un tube central (1) pour introduire un jet de combustible à haute concentration en combustible pulvérisé et à vitesse axiale élevée, le tube central (1) étant entouré d'un tube (2) pour introduire un courant gazeux additionnel dans un intervalle annulaire (12) entourant la bouche du tube central.

2. Installation de brûleur suivant la revendication 1, caractérisée en ce qu'à l'intervalle annulaire (12) entourant la bouche du tube central (1), est reliée une chambre (6) d'un diamètre plus grand que celui du tube central (1).

3. Installation de brûleur suivant la revendication 1 et 2, caractérisée en ce qu'à la chambre (6) est reliée une seconde chambre (7) d'un diamètre encore plus grand que celui de la première chambre et qui crée à la bouche de la première chambre un second intervalle annulaire (13) pour introduire une partie du courant gazeux additionnel dans la seconde chambre (7).

4. Installation de brûleur suivant l'une des revendications 1 à 3, caractérisée en ce que des générateurs de giration (4, 5 ou 10, 11 et 25) sont prévus dans l'un ou les deux intervalles annulaires.

5. Installation de brûleur suivant la revendication 4, caractérisée en ce que l'angle de giration des générateurs de giration (4 et 5 ou 10, 11 et 25) est variable d'une valeur maximale jusqu'à 0.

6. Installation de brûleur suivant une des revendications 3 à 5, caractérisée en ce que la longueur effective (L6 ou L7) des chambres (6 et 7) est réglable.

7. Installation de brûleur suivant la revendication 6, caractérisée en ce que la première chambre (6) est formée d'un bout de tube 16 déplaçable longitudinalement sur le tube central (1) et en ce que la deuxième chambre (7) est constituée soit d'une paroi tubulaire (3) fixe par rapport au tube central, soit éventuellement d'un bout de tube (17) déplaçable longitudinalement.

8. Installation de brûleur suivant l'une des revendications 1 à 7, caractérisée en ce que, pour un intervalle annulaire ou les deux (12 et 13), est prévu un dispositif (14, 62) pour créer des turbulences.

9. Installation de brûleur suivant la revendication 8, caractérisée en ce que le dispositif pour créer les tourbillons est formé par la surface de garde interne qui se trouve entre la bouche du tube central (1) et l'ouverture de sortie de l'intervalle annulaire (12).

10. Installation de brûleur suivant la revendication 8, caractérisée en ce que le dispositif pour créer les turbulences est formé par la surface de garde extérieure (26) qui se trouve entre l'ouverture de sortie de l'intervalle annulaire (12) et la paroi de la chambre (6).

11. Installation de brûleur suivant l'une des revendications 1 à 10, caractérisée en ce qu'au voisinage de l'ouverture de sortie (32, 34) d'au moins un intervalle annulaire (12 et 13), est prévu un rétrécissement annulaire (31 et 33) pour empêcher des retours de courant dans les intervalles annulaires.

12. Installation de brûleur suivant l'une des revendications 3 à 11, caractérisée en ce que les deux intervalles annulaires (12 et 13) sont reliés, côté entrée, par un tube à gaz commun (9).

13. Installation de brûleur suivant la revendication 12, caractérisée en ce que la section d'ouverture (29) d'un des intervalles annulaires (12 et 13) est réglable par rapport à celle de l'autre intervalle annulaire.

14. Installation de brûleur, suivant la revendication 13, caractérisée en ce que la première chambre (6), fermée par un bout de tube (16) déplaçable longitudinalement, est déplaçable par rapport à une partie de paroi conique (30).

15. Installation de brûleur, suivant l'une des revendications 3 à 11, caractérisée en ce que chacun des deux intervalles annulaires (12 et 3) est relié, côté entrée, à un tube à gaz particulier (21, 22).

16. Installation de brûleur suivant l'une des revendications précédentes, caractérisée en ce que la bouche du tube central (1) est entourée d'une sortie en forme de buse annulaire (28) qui est reliée à un autre tube à gaz (27) pour un gaz de commande de l'accélération axiale du jet de combustible pulvérulent.

17. Installation de brûleur suivant l'une des revendications précédentes, caractérisée en ce qu'au centre de la bouche du tube central (1), est disposée la tête de buse (51) d'une lance à essence (50) pour introduire un combustible liquide dans le jet de combustible pulvérulent, la lance à essence comportant un tube (53) pour introduire un gaz de pulvérisation et la tête de buse comportant un dispositif pour la pulvérisation sous pression du combustible liquide dans un angle faible.

18. Installation de brûleur suivant l'une des revendications précédentes, caractérisée en ce que les tubes à gaz (2, 9, 21, 22) d'introduction d'un courant de gaz additionnel dans l'intervalle annulaire (12) ou les intervalles annulaires (12, 13), le tube à gaz (27) d'introduction d'un gaz de commande et le tube (53) d'introduction d'un gaz de pulvérisation sont prévus facultativement. comme tubes d'alimentation en air ou comme tubes d'alimentation en gaz combustible.

Fig.1

Fig. 2

Fig. 3

Fig.4

Fig.5

Fig. 6

Fig. 7

4

Fig. 8

Fig.9

Fig.10

0 115 247

Fig. 11

0 115 247

Fig.12 A

Axiale Luftgeschwindigkeit

8

3

Fig.12 B

Brennstaub - Konzentration

8

3